(19) Europäisches Patentamt
European Patent Office
Office européen des brevets

(11) EP 3 246 158 B1

(12) EUROPEAN PATENT SPECIFICATION

(45) Date of publication and mention of the grant of the patent:
**26.05.2021 Bulletin 2021/21**

(21) Application number: **16737464.4**

(22) Date of filing: **15.01.2016**

(51) Int Cl.:
***B32B 27/08*** *(2006.01)* ***B32B 27/32*** *(2006.01)*
***B32B 27/18*** *(2006.01)* ***B65D 1/00*** *(2006.01)*
***B65D 65/40*** *(2006.01)*

(86) International application number:
**PCT/JP2016/051148**

(87) International publication number:
**WO 2016/114393 (21.07.2016 Gazette 2016/29)**

# (54) LAMINATE, CONTAINER, METHOD FOR PRODUCING CONTAINER, AND SHEET FOR LAMINATE RAW MATERIAL

LAMINAT, BEHÄLTER, VERFAHREN ZUR HERSTELLUNG EINES BEHÄLTERS UND BOGEN FÜR LAMINATROHMATERIAL

STRATIFIÉ, RÉCIPIENT, PROCÉDÉ DE FABRICATION D'UN RÉCIPIENT ET FEUILLE POUR MATIÈRE PREMIÈRE DE STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2015 JP 2015006488**

(43) Date of publication of application:
**22.11.2017 Bulletin 2017/47**

(73) Proprietor: **Prime Polymer Co., Ltd.**
**Tokyo 105-7122 (JP)**

(72) Inventors:
- **SEKIYA, Keiko**
**Ichihara-shi,**
**Chiba 299-0108 (JP)**
- **KATO, Koji**
**Ichihara-shi,**
**Chiba 299-0108 (JP)**
- **INOUE, Kensei**
**Ichihara-shi,**
**Chiba 299-0108 (JP)**
- **YANAGIDA, Kengo**
**Ichihara-shi,**
**Chiba 299-0108 (JP)**

(74) Representative: **J A Kemp LLP**
**14 South Square**
**Gray's Inn**
**London WC1R 5JJ (GB)**

(56) References cited:
**EP-A2- 0 850 756**
**WO-A1-2011/090101**
**WO-A1-2011/090101**
**JP-A- H10 180 909**
**JP-A- 2000 211 076**
**JP-A- 2006 076 181**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a laminate, a container and manufacturing method thereof, and a sheet for use as a raw material of a laminate.

### Background Art

Containers for packaging foods such as jelly, pudding, and coffee (hereinafter, also referred to as food packaging containers) are required to have good visibility of the content. In other words, containers excellent in transparency are required. As a raw material of the containers excellent in transparency, propylene-based resin compositions excellent in heat resistance, rigidity and transparency are used.

On the other hand, foods are handled under low-temperature environment in the storage and distribution in many cases. Accordingly, food packaging containers are required to have not only impact resistance at normal temperature but also impact resistance at low temperature, i.e. low-temperature impact resistance.

Known examples of the propylene-based resin composition excellent in impact resistance include a composition which contains a propylene-ethylene block copolymer, a nucleating agent, and a low-density polyethylene resin or a linear low-density polyethylene resin (refer to Patent Literature 1).

Known examples of the propylene-based resin composition excellent in low-temperature impact resistance include a composition having specific physical properties including a propylene block copolymer and an ethylene-based resin (refer to Patent Literature 2 and 3).

A propylene polymer laminate which comprises surface layers and an intermediate layer is known, wherein each surface later is comprised of a thermoplastic resin composition comprising a propylene polymer and an ethylene-$\alpha$-olefin copolymer with particular properties and the intermediate layer is comprised of a propylene-$\alpha$-olefin random copolymer with particular properties (refer to Patent Literature 4).

### Citation List

#### Patent Literature

Patent Literature 1: JP2001-26686A
Patent Literature 2: JP2002-187996A
Patent Literature 3: JP2002-187997A
Patent Literature 4: EP 0 850 756 A2

### Summary of Invention

#### Technical Problem

Containers obtained by vacuum forming or pressure forming a propylene-based resin composition are excellent in transparency, applicable to beverages and the like. Use of polypropylene alone, however, results in low low-temperature impact strength, so that the containers may crack in transportation under low temperature in some cases. On the other hand, the blending with an ethylene-based polymer improves low-temperature impact strength but reduces transparency. In particular, a high blending ratio of the ethylene-based polymer reduces rigidity.

It is an object of the present invention to provide a laminate from which a container excellent in transparency, having high low-temperature impact strength and rigidity, can be manufactured.

#### Solution to Problem

The present invention is described in the following (1) to (12).

[1] A laminate including:

a resin layer [I] including a resin composition [I] including 60.0 % by mass or more and 83.0 % by mass or less of a propylene-based polymer (A) and 17.0 % by mass or more and 40.0 % by mass or less of an ethylene-based polymer (B), wherein (A) + (B) = 100.0 % by mass, and
a resin layer [II] including a resin composition [II] including 80.0 % by mass or more and 99.9 % by mass or less of a propylene-based polymer (A), 0.0 % by mass or more and less than 15.0 % by mass of an ethylene-based polymer (B), and 0.1 % by mass or more and 20.0 % by mass or less of a nucleating agent (C), wherein (A) + (B) + (C) = 100.0 % by mass,
the propylene-based polymer (A) and the ethylene-based polymer (B) satisfying the following requirements (i) to (iv) in both of the resin compositions [I] and [II]:
requirement (i): the propylene-based polymer (A) has a melt flow rate (MFR) of 0.1 to 12.0 g/10 min, as measured at a temperature of 230°C under a load of 21.18 N in accordance with JIS K6921;
requirement (ii): the propylene-based polymer (A) has a content of $\alpha$-olefm other than propylene of 0 to 5 % by mass, as determined by infrared spectroscopy;
requirement (iii): the ethylene-based polymer (B) has a density of 890 to 920 kg/m$^3$, as measured in accordance with JIS K6922; and
requirement (iv): the ratio of MFR (A) of the propylene-based polymer (A) measured at a temperature of 230°C under a load of 21.18 N in accordance with JIS K6921 to MFR (B) of the ethylene-based polymer (B) measured at a temperature of 230°C under a load of 21.18 N in accordance with JIS K6921, i.e., MFR (A)/MFR (B), is 0.2 to 5.0.

[2] The laminate according to [1], wherein in both of the resin compositions [I] and [II], the ethylene-based polymer (B) is a composition including 50.0 to 100.0 % by mass of an ethylene-based polymer (B1) with a density of 891 to 945 kg/m$^3$ and 0.0 to 50.0 % by mass of an ethylene-based polymer (B2) with a density of 890 kg/m$^3$ or less, wherein (B1) + (B2) = 100.0 % by mass.
[3] The laminate according to [1] or [2], wherein the surface of the laminate is formed from the resin layer [II].
[4] The laminate according to [1] or [2], wherein the laminate includes the resin layer [I] and the resin layer [II], the thickness ratio of the resin layer [II] to the resin layer [I] (resin layer [II]/resin layer [I]) being 1/198 to 1/3.
[5] The laminate according to [1] or [2], wherein the resin layer [II], the resin layer [I], and the resin layer [II] are laminated in this order, and the thickness ratio of each layer (resin layer [II]/resin layer [I]/resin layer [II]) is 1/198/1 to 1/3/1.
[6] The laminate according to any of [1] to [5], wherein the thickness of the laminate is 3 mm or less.
[7] The laminate according to any of [1] to [6], wherein the content of $\alpha$-olefm other than propylene in the requirement (ii) is the content of ethylene.
[8] A container including the laminate according to any of [1] to [7].
[9] The container according to [8], wherein the thickness of the resin layer [II] is 1.5 $\mu$m or more.
[10] The container according to [8] or [9], wherein the container is obtained by vacuum pressure forming the laminate.
[11] A method for manufacturing a container including vacuum forming, pressure forming, or vacuum pressure forming the laminate according to any of [1] to [7] to obtain the container.
[12] A sheet for use as a raw material of a laminate, including 60.0 % by mass or more and 83.0 % by mass or less of a propylene-based polymer (A) and 17.0 % by mass or more and 40.0 % by mass or less of an ethylene-based polymer (B), wherein (A) + (B) = 100.0 % by mass,
the sheet satisfying the following requirements (i) to (v):
requirement (i): the propylene-based polymer (A) has a melt flow rate (MFR) of 0.1 to 12.0 g/10 min, as measured at a temperature of 230°C under a load of 21.18 N in accordance with JIS K6921;
requirement (ii): the propylene-based polymer (A) has a content of $\alpha$-olefm other than propylene of 0 to 5 % by mass, as determined by infrared spectroscopy;
requirement (iii): the ethylene-based polymer (B) has a density of 890 to 920 kg/m$^3$, as measured in accordance with JIS K6922;
requirement (iv): the ratio of MFR (A) of the propylene-based polymer (A) measured at a temperature of 230°C under a load of 21.18 N in accordance with JIS K6921 to MFR (B) of the ethylene-based polymer (B) measured at a temperature of 230°C under a load of 21.18 N in accordance with JIS K6921, i.e., MFR (A)/MFR (B), is 0.2 to 5.0; and
requirement (v): the sheet for use as a raw material of a laminate has a thickness of 2.97 mm or less.

Advantageous Effects of Invention

The present invention can provide a laminate from which a container excellent in transparency, having high low-temperature impact strength and rigidity, can be manufactured.

Description of Embodiments

[Laminate]

The laminate of the present invention includes a resin layer [I] and a resin layer [II]. The resin layer [I] includes a resin composition [I] containing 60.0 % by mass or more and 83.0 % by mass or less of a propylene-based polymer (A) and 17.0 % by mass or more and 40.0 % by mass or less of an ethylene-based polymer (B). In the resin composition [I], the total of the propylene-based polymer (A) and the ethylene-based polymer (B) is 100.0 % by mass. The resin layer [II] includes a resin composition [II] containing 80.0 % by mass or more and 99.9 % by mass or less of a propylene-based polymer (A), 0.0 % by mass or more and less than 15.0 % by mass of an ethylene-based polymer (B), and 0.1 % by mass or more and 20.0 % by mass or less of a nucleating agent (C). In the resin composition [II], the total of the propylene-based polymer (A), the ethylene-based polymer (B), and the nucleating agent (C) is 100.0 % by mass.

The propylene-based polymer (A) contained in the resin composition [I] and the propylene-based polymer (A) contained in the resin composition [II] may be the same or different. The ethylene-based polymer (B) contained in the resin composition [I] and the ethylene-based polymer (B) contained in the resin composition [II] may be the same or different. The laminate can contain at least the resin layer [I] and the resin layer [II]. For example, the laminate may have a two-layer structure including one resin layer [I] and one resin layer [II], or a three-layer structure including one resin layer [II], one resin layer [I], and one resin layer [II], laminated in this order.

In both of the resin composition [I] and the resin composition [II] of the present invention, the propylene-based polymer (A) and the ethylene-based polymer (B) satisfy the following requirements (i) to (iv).

Requirement (i): the propylene-based polymer (A) has a melt flow rate (MFR) of 0.1 to 12.0 g/10 min, as measured at a temperature of 230°C under a load of 21.18 N in accordance with JIS K6921.

Requirement (ii): the propylene-based polymer (A) has a content of α-olefm other than propylene of 0 to 5 % by mass, as determined by infrared spectroscopy.

Requirement (iii): the ethylene-based polymer (B) has a density of 890 to 920 kg/$m^3$, as measured in accordance with JIS K6922.

Requirement (iv): the ratio of MFR (A) of the propylene-based polymer (A) measured at a temperature of 230°C under a load of 21.18 N in accordance with JIS K6921 to MFR (B) of the ethylene-based polymer (B) measured at a temperature of 230°C under a load of 21.18 N in accordance with JIS K6921, i.e., MFR (A)/MFR (B), is 0.2 to 5.0.

The blending of the ethylene-based polymer (B) in the propylene-based polymer (A) for improvement of the low-temperature impact strength allows particles of the ethylene-based polymer (B) dispersed in the propylene-based polymer (A) to cause irregularities on the surface of a container formed from a transparent laminate by vacuum forming or the like, resulting in reduction of the transparency. It is usually presumed that the reduction of the transparency in such non-compatible resin compositions is caused by the internal haze at a resin interface. The present inventors found the reduction of the transparency is mainly caused by the irregularities on the surface (external haze). In order to reduce the irregularities on the surface (external haze), the resin layer [II] with a smaller content of the ethylene-based polymer (B) was therefore provided outside the resin layer [I] by the present inventors. As a result, the irregularities on the surface were reduced.

In the present invention, namely, resin compositions [I] and [II] which contain the propylene-based polymer (A) and the ethylene-based polymer (B) which satisfy the requirements (i) to (iv) with specified compositions are used as raw materials of the resin layers [I] and [II], respectively. As a result, provided is a laminate from which a container excellent in transparency, having high low-temperature impact strength and rigidity, can be manufactured. In the case of the resin composition [II] not containing the ethylene-based polymer (B), the resin composition [II] may satisfy the requirements (i) and (ii).

(Propylene-based polymer (A))

As long as the propylene-based polymer (A) of the present invention contains 50 % by mass or more of propylene units and satisfies the requirements (i), (ii) and (iv), no particular limitation is imposed. Examples of the propylene-based polymer (A) include a homo polypropylene (homo PP) as homopolymer of propylene, and a propylene-α-olefin random copolymer (random PP). The propylene-based polymer (A) may be a composition containing two or more types of propylene-based polymers.

Examples of α-olefins in the propylene-α-olefin random copolymer include ethylene and α-olefins having 4 to 20 carbon atoms. Examples of the α-olefins having 4 to 20 carbon atoms include 1-butene, 1-pentene, 1-hexene, 4-methyl-1-pentene, 1-octene, 1-decene, 1-dodecene, 1-tetradodecen, 1-hexadodecen, 1-octadodecen, 1-eicosene, 4-methyl-1-pentene, 2-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, ethyl-1-octene, and methyl-1-nonene. These may be used alone or in a combination of two or more. Among these, ethylene and α-olefins having 4 to 8 carbon atoms are preferred, and ethylene is more preferred.

Examples of the propylene-α-olefin random copolymer include a propylene-ethylene random copolymer, a propylene-1-butene random copolymer, a propylene-1-pentene random copolymer, a propylene-1-hexene random copolymer, a propylene-1-octene random copolymer, and a propylene-ethylene-1-butene random copolymer. These may be used alone or in a combination of two or more. Among these, a propylene-ethylene random copolymer is preferred. The content of α-olefm unit in the propylene-α-olefin random copolymer is preferably 5 % by mass or less.

Examples of the commercially available homo PP and random PP include PM series, PL series, and PC series (trade names, manufactured by Sun Alloys Co., Ltd.), PRIME POLYPRO (trade name, manufactured by Prime Polymer Co., Ltd.), NOVATEC (trade name, manufactured by Japan Polypropylene Corporation), E-200GP (trade name, manufactured by Prime Polymer Co., Ltd.), E-330GV (trade name, manufactured by Prime Polymer Co., Ltd.), F107DJ (trade name, manufactured by Prime Polymer Co., Ltd.), and B241 (trade name, manufactured by Prime Polymer Co., Ltd.). These may be used alone or in a combination of two or more.

<Requirement (i)>

The propylene-based polymer (A) has a melt flow rate (MFR) of 0.1 to 12.0 g/10 min, preferably 0.6 to 7.0 g/10 min, more preferably 1.0 to 5.0 g/10 min, still more preferably 1.5 to 3.0 g/10 min, as measured at a temperature of 230°C under a load of 21.18 N in accordance with JIS K6921. In the case of the MFR outside the range of 0.1 to 12.0 g/10 min, molding cannot be achieved due to the lowered moldability. In addition, the low-temperature impact strength of containers obtained from the laminate of the present invention decreases.

<Requirement (ii)>

The propylene-based polymer (A) has a content of α-olefm other than propylene of 0 to 5 % by mass, preferably 0 to 4 % by mass, more preferably 0 to 3 % by mass, as determined by infrared spectroscopy. With a content of the α-olefins other than propylene of more than 5 % by mass, the rigidity decreases. The α-olefins other than propylene are preferably α-olefins having 2 or 4 to 10 carbon atoms, more preferably α-olefins having 2 or 4 carbon atoms, still more preferably ethylene. Examples of the propylene-based polymer (A) with a content of α-olefins other than propylene within the range include homo PP, random PP with a content of α-olefins other than propylene of 5 % by mass or less, and a composition containing homo PP and random PP with a content of α-olefins other than propylene of 5 % by mass or less. The content of α-olefins other than propylene may be 0 % by mass. In other words, the propylene-based polymer (A) may not include α-olefm units other than propylene. The content of α-olefins other than propylene is a value calculated by the following method. In the case of obtaining the content of ethylene as α-olefin other than propylene, the wavelengths for use in infrared spectroscopy are 718 $cm^{-1}$ and 733 $cm^{-1}$. The wavelengths for use in measurement of α-olefins other than ethylene are generally known.

(Ethylene-based polymer (B))

As long as the ethylene-based polymer (B) of the present invention contains 50 % by mass or more of ethylene units and satisfies the requirements (iii) and (iv), no particular limitation is imposed. Examples of the ethylene-based polymer (B) include an ethylene homopolymer and an ethylene-α-olefin copolymer. The ethylene-based polymer (B) may be a composition containing two or more types of ethylene-based polymers.

Examples of α-olefins in the ethylene-α-olefin copolymer include α-olefins having 3 to 20 carbon atoms. Specific examples include propylene, 1-butene, 1-pentene, 1-hexene, 4-methyl-1-pentene, 1-octene, 1-decene, 1-dodecene, 1-tetradodecen, 1-hexadodecen, 1-octadodecen, 1-eicosene, 4-methyl-1-pentene, 2-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methyl ethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, ethyl-1-octene, and methyl-1-nonene. Among these, α-olefins having 3 to 8 carbon atoms are preferred, and propylene, 1-butene, and 1-octene are more preferred. The ethylene-based polymer (B) may include one type of these units or two or more types thereof.

Specific examples of the ethylene-α-olefin copolymer include an ethylene-propylene random copolymer and an ethylene-1-butene random copolymer. Among these, an ethylene-propylene random copolymer is preferred.

Examples of the commercially available ethylene-based polymer (B) include EVOLUE (trade name, manufactured by Prime Polymer Co., Ltd.), HARMOREX (trade name, manufactured by Japan Polyethylene Corporation), KERNEL (trade name, manufactured by Japan Polyethylene Corporation), NOVATEC (trade name, manufactured by Japan Polyethylene Corporation), ELITE, DOWLEX, AFFINITY and ATTANE (trade names, manufactured by The Dow Chemical Company), EXCEED and ENABLE (trade names, manufactured by ExxonMobil Chemical Company), SP1520 (trade name, manufactured by Prime Polymer Co., Ltd.), SP0510 (trade name, manufactured by Prime Polymer Co., Ltd.), SP1071C(trade name, manufactured by Prime Polymer Co., Ltd.), SP2510 (trade name, manufactured by Prime Polymer Co., Ltd.), and A1085 (trade name, manufactured by Mitsui Chemicals, Inc.). These may be used alone or in a combination of two or more.

<Requirement (iii)>

The ethylene-based polymer (B) has a density of 890 to 920 kg/m$^3$, preferably 895 to 918 kg/m$^3$, more preferably 900 to 910 kg/m$^3$, as measured in accordance with JIS K6922. In the case of the density of less than 890 kg/m$^3$, the rigidity decreases. In the case of the density of more than 920 kg/m$^3$, the transparency and the low-temperature impact strength decrease.

In both of the resin compositions [I] and [II], the ethylene-based polymer (B) is preferably a composition including 50.0 to 100.0 % by mass of an ethylene-based polymer (B1) with a density of 891 to 945 kg/m$^3$ and 0.0 to 50.0 % by mass of an ethylene-based polymer (B2) with a density of 890 kg/m$^3$ or less, from the viewpoint of rigidity. Hereupon, ethylene-based polymer (B1) + ethylene-based polymer (B2) = 100.0 % by mass. The ethylene-based polymer (B1) has a density of, preferably 895 to 925 kg/m$^3$, more preferably 900 to 920 kg/m$^3$. The ethylene-based polymer (B2) has a density of, preferably 855 to 888 kg/m$^3$, more preferably 870 to 886 kg/m$^3$.

The blending ratio between the ethylene-based polymer (B1) and the ethylene-based polymer (B2) is preferably 55.0 to 95.0 % by mass of the ethylene-based polymer (B1) to 5.0 to 45.0 % by mass of the ethylene-based polymer (B2), more preferably 60.0 to 90.0 % by mass of the ethylene-based polymer (B1) to 10.0 to 40.0 % by mass of the ethylene-based polymer (B2), still more preferably 65.0 to 85.0 % by mass of the ethylene-based polymer (B1) to 15.0 to 35.0 % by mass of the ethylene-based polymer (B2). With a blending ratio in the range, the laminates and the containers have high transparency and rigidity.

<Requirement (iv)>

The ratio of MFR (A) of the propylene-based polymer (A) measured at a temperature of 230°C under a load of 21.18 N in accordance with JIS K6921 to MFR (B) of the ethylene-based polymer (B) measured at a temperature of 230°C under a load of 21.18 N in accordance with JIS K6921, i.e., MFR (A)/MFR (B), is 0.2 to 5.0, preferably 0.3 to 4.0, more preferably 0.4 to 3.0, still more preferably 0.6 to 1.5. With an MFR (A)/MFR (B) out of the range of 0.2 to 5.0, the transparency of a laminate and a container decreases. With an MFR (A)/MFR (B) less of 0.2, the low-temperature impact strength of a container decreases.

(Nucleating agent (C))

In the present invention, the resin composition [II] to form the resin layer [II] contains a nucleating agent (C). The resin layer [I] also may contain a nucleating agent.

As the nucleating agent (C), a sorbitol-based nucleating agent, a phosphorus-based nucleating agent, a metal carboxylate-based nucleating agent, a polymer nucleating agent, an inorganic compound, and the like may be used without specific limitations. As the nucleating agent (C), use of a sorbitol-based nucleating agent, a phosphorus-based nucleating agent, or a polymer nucleating agent is preferred.

Examples of the sorbitol-based nucleating agent for use include nonitol,1,2,3-trideoxy-4,6:5,7-bis-O-[(4-propylphenyl)methylene] (nonitol 1,2,3-trideoxy-4,6:5,7-bis-O-[(4-propylphenyl)methylene]), 1,3,2,4-dibenzylidene sorbitol, 1,3,2,4-di-(p-methylbenzylidene)sorbitol, and 1,3-p-chlorobenzylidene-2,4-p-methylbenzylidene sorbitol.

Examples of the phosphorus-based nucleating agent for use include sodium-bis-(4-t-butylphenyl)phosphate, potassium-bis-(4-t-butylphenyl)phosphate, sodium-2,2'-ethylidene-bis (4,6-di-t-butylphenyl)phosphate, sodium-2,2'-methylene-bis(4,6-di-t-butylphenyl)phosphate, and bis(2,4,8,10-tetra-t-butyl-6-hydroxy-12H-dibenzo[d,g] [1,3,2]dioxaphosphosine-6-oxide)aluminum hydroxide salt.

Examples of the metal carboxylate-based nucleating agent for use include p-t-butyl aluminum benzoate, aluminum adipate, and sodium benzoate.

As the polymer nucleating agent, branched $\alpha$-olefm polymers are preferably used. Examples of the branched $\alpha$-olefm polymers include a homopolymer of 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, or 3-ethyl-1-hexene, or a copolymer thereof, or a copolymer thereof with other $\alpha$-olefins. The polymer of 3-methyl-1-butene is preferred in the view point of having excellent transparency, low-temperature impact strength, and rigidity, and economy.

As the inorganic compound, for example, talc, mica, and calcium carbonate can be used.

Among these nucleating agents, as the nucleating agent (C), nonitol, 1,2,3-trideoxy-4,6:5,7-bis-O-[(4-propylphenyl)methylene], and bis(2,4,8,10-tetra-t-butyl-6-hydroxy-12H-dibenzo[d,g] [1,3,2]dioxaphosphosine-6-oxide)aluminum hydroxide salt are preferably used from the viewpoints of transparency, low-temperature impact strength, high rigidity, and low odor. These nucleating agents may be used alone or in a combination of two or more.

As the nucleating agent (C), commercial products can be used. For example, nonitol, 1,2,3-trideoxy-4,6:5,7-bis-O-[(4-propylphenyl)methylene] is commercially available under the trade name, Millad NX 8000 (manufactured by Milliken Chemical). ADEKA STAB NA-21 (trade name, manufactured by Adeka Corporation) contains bis(2,4,8,10-tetra-t-butyl-6-hydroxy-12H-dibenzo[d,g] [1,3,2]dioxaphosphosine-6-oxide)aluminum hydroxide salt as a main component.

In the laminate of the present invention, the resin layer [II] contains a predetermined amount of nucleating agent (C), so that containers formed from the laminate have improved rigidity and transparency. It is presumed that with a predetermined content of the nucleating agent (C), the size of spherulite crystals in the resin composition [II] decreases, so that the diffused reflection of light is reduced to improve the transparency. It is also presumed that the enhanced degree of crystallization results in the high rigidity.

(Resin layer [I])

The resin layer [I] of the present invention contains a resin composition [I]. The resin layer [I] may be formed of the resin composition [I]. The resin composition [I] contains 60.0 % by mass or more and 83.0 % by mass or less of a propylene-based polymer (A) and 17.0 % by mass or more and 40.0 % by mass or less of an ethylene-based polymer (B). Hereupon, propylene-based polymer (A) + ethylene-based polymer (B) = 100.0 % by mass. Preferably the resin composition [I] contains 65.0 % by mass or more and 83.0 % by mass or less of a propylene-based polymer (A) and 17.0 % by mass or more and 35.0 % by mass or less of an ethylene-based polymer (B), and more preferably the resin composition [I] contains 70.0 % by mass or more and 80.0 % by mass or less of a propylene-based polymer (A) and 20.0 % by mass or more and 30.0 % by mass or less of an ethylene-based polymer (B).

With an ethylene-based polymer (B) content of less than 15.0 % by mass, the low-temperature impact strength is poor. With an ethylene-based polymer (B) content of more than 40.0 % by mass, the transparency and rigidity decrease.

(Resin layer [II])

The resin layer [II] of the present invention contains a resin composition [II]. The resin layer [II] may contain the resin composition [II]. The resin composition [II] contains 80.0 % by mass or more and 99.9 % by mass or less of a propylene-based polymer (A), 0.0 % by mass or more and less than 15.0 % by mass of an ethylene-based polymer (B), and 0.1 % by mass or more and 20.0 % by mass or less of a nucleating agent (C). Hereupon, propylene-based polymer (A) + ethylene-based polymer (B) + nucleating agent (C) = 100.0 % by mass. Alternatively, the resin composition [II] may not contain an ethylene-based polymer (B). Preferably the resin composition [II] contains 85.0 % by mass or more and 99.9 % by mass or less of a propylene-based polymer (A), 0.0 % by mass or more and 13.0 % by mass or less of an ethylene-based polymer (B), and 0.1 % by mass or more and 15.0 % by mass or less of a nucleating agent (C), and more preferably the resin composition [II] contains 89.9 % by mass or more and 99.9 % by mass or less of a propylene-based polymer (A), 0.0 % by mass or more and 10.0 % by mass or less of an ethylene-based polymer (B), and 0.1 % by mass or more and 10.0 % by mass or less of a nucleating agent (C).

With an ethylene-based polymer (B) content of 15.0 % by mass or more, the transparency and rigidity decrease. With a nucleating agent (C) content of less than 0.1 % by mass, the rigidity and transparency decrease. Even with a nucleating agent (C) content of more than 20.0 % by mass, the effect of further improving physical properties is small, which is uneconomical.

(Laminate)

The laminate of the present invention contains a resin layer [I] and a resin layer [II]. The laminate can contain at least the resin layer [I] and the resin layer [II], and may contain a layer other than the resin layer [I] and the resin layer [II]. From the viewpoints of the low-temperature impact strength and transparency, however, the laminate preferably has a two-layer structure including one resin layer [I] and one resin layer [II] which are laminated. Alternatively, from the viewpoints of the low-temperature impact strength and transparency, the laminate preferably has a three-layer structure including one resin layer [II], one resin layer [I], and one resin layer [II], laminated in this order. Furthermore, from the viewpoint of transparency, the surface of the laminate is preferably formed from the resin layer [II].

In the case of a laminate containing the resin layer [I] and the resin layer [II] (two-layer structure), the thickness ratio of the resin layer [II] to the resin layer [I] (resin layer [II]/resin layer [I]) is preferably 1/198 to 1/3, more preferably 1/12 to 1/5. With the ratio being 1/198 or more, the transparency of a laminate and a container is improved. With the ratio being 1/3 or less, the low-temperature impact strength of a laminate and a container is improved.

In the case of a laminate including the resin layer [II], the resin layer [I], and the resin layer [II], laminated in this order (three-layer structure), the thickness ratio of each layer (resin layer [II]/resin layer [I]/resin layer [II]) is preferably 1/198/1 to 1/3/1, more preferably 1/12/1 to 1/5/1. With the ratio in the range, the transparency and low-temperature impact strength of a laminate and a container are improved. The ratio indicated above corresponds to the case of two resin layers [II] having the same thickness.

The laminate has a thickness of, preferably 3 mm or less, more preferably 0.1 mm or more and 2 mm or less. With a thickness of the laminate of 3 mm or less, the laminate can be easily formed into a container by vacuum pressure forming as described below.

(Manufacturing method of laminate)

In manufacturing of the laminate of the present invention, for example, predetermined amounts of a propylene-based polymer (A) and an ethylene-based polymer (B) may be weighed at the blending ratio in the range described above and then directly fed in a hopper or the like of a sheet forming machine. Alternatively, the raw materials after weighing may be mixed with a ribbon blender, a Banbury mixer, a Henschel mixer, a super mixer or the like in advance, melt-kneaded further with a compounding machine or a kneader such as a single-screw or twin-screw extruder and rolls, and then formed into a sheet form.

In the present invention, forming into a film or sheet may be performed by a method for use in manufacturing propylene-based resin films or sheets including extrusion molding such as a T-die method and an inflation method, calendering and casting.

[Container and manufacturing method thereof]

The container of the present invention is formed from the laminate of the present invention. The container of the present invention can be suitably used, for example, as a food packaging container of beverages handled under low-temperature environment. The container of the present invention can be obtained by forming the laminate of the present invention by any forming method such as vacuum forming, pressure forming and vacuum pressure forming. However, from the viewpoint of the transparency, the container is preferably obtained by vacuum pressure forming a laminate. Also from the viewpoint of the transparency, the surface of the container is preferably formed from the resin layer [II]. The thickness of the resin layer [II] for forming a container is preferably 1.5 μm or more, more preferably 10 μm or more and 100 μm or less. With the resin layer [II] having a thickness of 1.5 μm or more, the low-temperature impact strength of a container is improved.

[Sheet for use as raw material of laminate]

The sheet for use as a raw material of a laminate according to the present invention contains 60.0 % by mass or more and 83.0 % by mass or less of a propylene-based polymer (A) and 17.0 % by mass or more and 40.0 % by mass or less of an ethylene-based polymer (B), wherein (A) + (B) = 100.0 % by mass. The sheet for use as a raw material of a laminate satisfies the following requirements (i) to (v). The sheet for use as a raw material of a laminate according to the present invention can be suitably used as the resin layer [I] in the laminate of the present invention.

Requirement (i): the propylene-based polymer (A) has a melt flow rate (MFR) of 0.1 to 12.0 g/10 min, as measured at a temperature of 230°C under a load of 21.18 N in accordance with JIS K6921.

Requirement (ii): the propylene-based polymer (A) has a content of α-olefm other than propylene of 0 to 5 % by mass, as determined by infrared spectroscopy.

Requirement (iii): the ethylene-based polymer (B) has a density of 890 to 920 kg/$m^3$, as measured in accordance with JIS K6922.

Requirement (iv): the ratio of MFR (A) of the propylene-based polymer (A) measured at a temperature of 230°C under a load of 21.18 N in accordance with JIS K6921 to MFR (B) of the ethylene-based polymer (B) measured at a temperature of 230°C under a load of 21.18 N in accordance with JIS K6921, i.e., MFR (A)/MFR (B), is 0.2 to 5.0.

Requirement (v): the sheet for use as a raw material of a laminate has a thickness of 2.97 mm or less.

The requirements (i) to (iv) are the same as the requirements (i) to (iv) described above.

In the requirement (v), the sheet for use as a raw material of a laminate has a thickness of 2.97 mm or less, preferably 2.50 mm or less, more preferably 2.30 mm or less. With a thickness of the sheet for use as a raw material of a laminate of 2.97 mm or less, a container excellent in transparency can be formed therefrom. The lower limit of the thickness of the sheet for use as a raw material of a laminate can be, for example, 0.80 mm or more, though not particularly limited.

The sheet for use as a raw material of a laminate may contain a nucleating agent (C) as optional ingredient.

Examples

The physical properties of the polymers and containers for use in Examples and Comparative Examples of the present invention were measured by the following methods.

<Melt flow rate (MFR)>

The melt flow rate (MFR) of the propylene-based polymer and the ethylene-based polymer was measured at a temperature of 230°C under a load of 21.18 N in accordance with JIS K6921.

<Density>

In the measurement of the density of the ethylene-based polymer in accordance with JIS K6922, a specimen was heated at 100°C for 30 minutes, then maintained at 23°C for 1 hour, and measured by the density gradient tube method.

<Ethylene content in propylene-based polymer>

The ethylene content in a propylene-based polymer was calculated from the absorbance at 718 $cm^{-1}$ and 733 $cm^{-1}$ of a sheet of propylene-based polymer with a thickness of 300 μm made under the following conditions, based on the following formulas, using FT/IR5300 (trade name, manufactured by JASCO Corporation).

•Sheet forming conditions

Pressing temperature: 220°C
Closing pressure in pressurization and cold pressing: 50 $kg/cm^2G$
Preheating: 5 min; pressurization: 5 min; cold pressing: 3 min

·IR measurement conditions

Cumulative number of times: 20; resolution: 4 $cm^{-1}$

·Ethylene content (χ (% by mass))

$$\chi = 0.809 \times (\chi 1 + \chi 2)$$

$$\chi 1 = 0.599 \times (A733/d \cdot l) - 0.161 \times (A718/d \cdot l)$$

$$\chi 2 = 0.599 \times (A718/d \cdot l) - 0.161 \times (A733/d \cdot l)$$

A718: absorbance at 718 $cm^{-1}$
A733: absorbance at 733 $cm^{-1}$
d: 0.9,1: thickness of sample

<Physical properties of container>

(1) Transparency

The haze of the body of a cup-shaped container (average thickness: 300 to 400 μm) was measured in accordance with JIS K7136. The total haze is the sum of the internal haze and the external haze.

(2) Low-temperature impact strength

A cup-shaped container in which 150 g of ethylene glycol was placed was heat-sealed at the top with a PP sheet and stored for 24 hours in a low-temperature thermostat chamber at -30°C. The cup-shaped container was then taken out from the low-temperature thermostat chamber, and the maximum fall height to cause no breakage of the cup-shaped container was evaluated.

(3) Rigidity

The tensile modulus of the body of a cup-shaped container (average thickness: 300 to 400 μm) was measured in accordance with JIS K7113-2. The measurement was performed in the extrusion direction (MD) of vacuum pressure forming and in the direction (TD) perpendicular to MD.

[Example 1]

A resin composition [I] was obtained by dry-blending 50.0 % by mass of (A-1) and 25.0 % by mass of (A-2) shown in Table 1 as propylene-based polymer (A) and 20.0 % by mass of (B-2) and 5.0 % by mass of (B-5) shown in Table 1 as ethylene-based polymer (B). A resin composition [II] was obtained by dry-blending 99.0 % by mass of (A-2) shown in Table 1 as propylene-based polymer (A) and 1.0 % by mass of MILLARD R8000 (trade name, sorbitol-based nucleating agent, manufactured by Dainichiseika Color & Chemicals Mfg. Co., Ltd.) as nucleating agent (C). Using the resin composition [I] as a raw material of a resin layer [I] and the resin composition [II] as a raw material of a resin layer [II], a laminate in a sheet form including the resin layer [II] (surface layer), the resin layer [I] (intermediate layer), and the resin layer [II] (surface layer), laminated in this order was obtained by using a multi-layer sheet forming machine (manufactured by Shinko K.K.). Specifically, the raw materials were melt-extruded at a temperature of 250°C to have a thickness ratio of each layer (resin layer [II]/resin layer [I]/resin layer [II]) of 1/10/1, and sandwiched between a first cooling roll and a second cooling roll (preset temperature: 50°C) for cooling. Consequently a laminate in a sheet form having a thickness of 1.6 mm was obtained at a rate of 0.7 m/min.

The laminate in a sheet form was heated to a temperature of 140°C and formed into a container with a cup-shaped mold by vacuum pressure forming. The mold had a top opening diameter of 70 mm, a bottom diameter of 60 mm, a depth of 70 mm, and a drawing ratio H/D of 1.0. The resin layer [II] of the container had a thickness of 25 μm. The container was subjected to the evaluation described above. The results are shown in Table 2.

[Examples 2 to 9 and Comparative Examples 1 to 14]

Except that the raw materials and the compositions of the resin compositions [I] and [II] were changed as shown in Table 2 to Table 6, laminates in a sheet form were made in the same manner as in Example 1. The laminates were formed into containers to be evaluated in the same manner as in Example 1. The results are shown in Table 2 to Table 6. In all cases, MILLARD R8000 (trade name, manufactured by Dainichiseika Color & Chemicals Mfg. Co., Ltd.) was used as nucleating agent. In Comparative Examples 12 to 14, a single-layer sheet consisting of the resin layer [I] was made. In Comparative Example 9, it was unable to form a container due to the occurrence of sagging during heating. In Comparative Example 10, it was unable to form a container due to uneven elongation of the laminate.

[Table 1]

| | Trade name | Type | MFR (230°C) [g/10 min] | Ethylene content [% by mass] | Density [kg/m$^3$] |
|---|---|---|---|---|---|
| A-1 | E-200GP (manufactured by Prime Polymer Co., Ltd.) | Homo PP | 2.0 | 0.0 | - |
| A-2 | E-330GV (manufactured by Prime Polymer Co., Ltd.) | Random PP | 2.4 | 2.7 | - |
| A-3 | F107DJ (manufactured by Prime Polymer Co., Ltd.) | Homo PP | 7.0 | 0.0 | - |
| A-4 | B241 (manufactured by Prime Polymer Co., Ltd.) | Random PP | 0.5 | 4.5 | - |
| A-5 | J2000GP (manufactured by Prime Polymer Co., Ltd.) | Homo PP | 20.0 | 0 | - |

(continued)

| | Trade name | Type | MFR (230°C) [g/10 min] | Ethylene content [% by mass] | Density [kg/$m^3$] |
|---|---|---|---|---|---|
| A-6 | E103WA (manufactured by Prime Polymer Co., Ltd.) | Homo PP | 3.0 | 0 | - |
| B-1 | SP1520 (manufactured by Prime Polymer Co., Ltd.) | PE | 4.0 | - | 913 |
| B-2 | SP0510 (manufactured by Prime Polymer Co., Ltd.) | PE | 2.0 | - | 904 |
| B-3 | SP1071C (manufactured by Prime Polymer Co., Ltd.) | PE | 20.0 | - | 910 |
| B-4 | SP2510 (manufactured by Prime Polymer Co., Ltd.) | PE | 3.0 | - | 923 |
| B-5 | A1085 (manufactured by Mitsui Chemicals, Inc.) | PE | 2.4 | - | 885 |
| B-6 | HZ5000H (manufactured by Prime Polymer Co., Ltd.) | PE | 0.22 | - | 958 |

[Table 2]

| | | | | Example 1 | Example 2 | Example 3 | Example 4 | Example 5 | Example 6 |
|---|---|---|---|---|---|---|---|---|---|
| Resin layer[I] (intermediate layer) | (A) | A-1 | % by mass | 50.0 | 50.0 | 50.0 | 50.0 | 50.0 | 50.0 |
| | | A-2 | | 25.0 | 25.0 | 25.0 | 25.0 | 25.0 | 25.0 |
| | | A-3 | | - | - | - | - | - | - |
| | | A-4 | | - | - | - | - | - | - |
| | | A-5 | | - | - | - | - | - | - |
| | | A-6 | | - | - | - | - | - | - |
| | (B) | B-1 | | - | - | - | - | - | - |
| | | B-2 | | 20.0 | 20.0 | 20.0 | 20.0 | 20.0 | 20.0 |
| | | B-3 | | - | - | - | - | - | - |
| | | B-4 | | - | - | - | - | - | - |
| | | B-5 | | 5.0 | 5.0 | 5.0 | 5.0 | 5.0 | 5.0 |
| | | B-6 | | - | - | - | - | - | - |
| | Nucleating agent | | | - | - | - | - | - | - |
| | MFR (A) | | g/10 min | 2.1 | 2.1 | 2.1 | 2.1 | 2.1 | 2.1 |
| | MFR (B) | | g/10 min | 2.1 | 2.1 | 2.1 | 2.1 | 2.1 | 2.1 |
| | Ethylene content (A) | | % by mass | 0.9 | 0.9 | 0.9 | 0.9 | 0.9 | 0.9 |
| | Density (B) | | kg/m$^3$ | 900 | 900 | 900 | 900 | 900 | 900 |
| | MFR (A)/MFR (B) | | - | 1.0 | 1.0 | 1.0 | 1.0 | 1.0 | 1.0 |
| Resin layer[II] (surface layer) | (A) | A-1 | % by mass | - | 50.0 | 50.0 | 50.0 | 50.0 | 50.0 |
| | | A-2 | | 99.0 | 49.0 | 44.0 | 39.0 | 39.0 | 39.0 |
| | | A-3 | | - | - | - | - | - | - |
| | | A-4 | | - | - | - | - | - | - |
| | | A-5 | | - | - | - | - | - | - |
| | | A-6 | | - | - | - | - | - | - |
| | (B) | B-1 | | - | - | - | 10.0 | - | - |
| | | B-2 | | - | - | 5.0 | - | 10.0 | 7.0 |
| | | B-3 | | - | - | - | - | - | - |
| | | B-4 | | - | - | - | - | - | - |
| | | B-5 | | - | - | - | - | - | 3.0 |
| | | B-6 | | - | - | - | - | - | - |
| | (C) | Nucleating agent | | 1.0 | 1.0 | 1.0 | 1.0 | 1.0 | 1.0 |
| | MFR (A) | | g/10 min | 2.4 | 2.2 | 2.2 | 2.2 | 2.2 | 2.2 |
| | MFR (B) | | g/10 min | - | - | 2.0 | 4.0 | 2.0 | 2.1 |
| | Ethylene content (A) | | % by mass | 2.7 | 1.3 | 1.3 | 1.2 | 1.2 | 1.2 |
| | Density (B) | | kg/m$^3$ | - | - | 904 | 913 | 904 | 898 |
| | MFR(A)/MFR(B) | | - | - | - | 1.1 | 0.6 | 1.1 | 1.0 |
| Thickness ratio of each layer([II]/[I]/[II]) | | | - | 1/10/1 | 1/10/1 | 1/10/1 | 1/10/1 | 1/10/1 | 1/10/1 |
| Evaluation of container | Transparency | Total haze | % | 17 | 4 | 9 | 15 | 16 | 15 |
| | | Internal haze | % | 2.5 | 2.5 | 2.5 | 2.5 | 2.5 | 2.5 |
| | | External haze | % | 14.4 | 1.5 | 6.0 | 12.9 | 13.4 | 12.8 |
| | | External haze/Internal haze | - | 5.8 | 0.6 | 2.4 | 5.2 | 5.4 | 5.1 |
| | Low-temperature impact strength | Maximum fall height | m | 6 | 7 | 8 | 7 | 7 | 6 |
| | Rigidity | Tensile modulus (MD) | MPa | 1330 | 1350 | 1320 | 1330 | 1300 | 1300 |
| | | Tensile modulus (TD) | | 1300 | 1310 | 1280 | 1270 | 1270 | 1250 |

[Table 3]

| | | | | Example 7 | Comparative Example 1 | Comparative Example 2 | Example 8 | Example 9 |
|---|---|---|---|---|---|---|---|---|
| Resin layer[I] (intermediate layer) | (A) | A-1 | % by mass | 50.0 | 50.0 | 50.0 | 50.0 | 50.0 |
| | | A-2 | | 25.0 | 35.0 | 35.0 | 30.0 | - |
| | | A-3 | | - | - | - | - | 25.0 |
| | | A-4 | | - | - | - | - | - |
| | | A-5 | | - | - | - | - | - |
| | | A-6 | | - | - | - | - | - |
| | (B) | B-1 | | - | - | 10.0 | - | - |
| | | B-2 | | 20.0 | 10.0 | - | 15.0 | 20.0 |
| | | B-3 | | - | - | - | - | - |
| | | B-4 | | - | - | - | - | - |
| | | B-5 | | 5.0 | 5.0 | 5.0 | 5.0 | 5.0 |
| | | B-6 | | - | - | - | - | - |
| | Nucleating agent | | | 1.0 | - | - | - | - |
| | MFR (A) | | g/10 min | 2.1 | 2.2 | 2.2 | 2.1 | 2.1 |
| | MFR (B) | | g/10 min | 2.1 | 2.1 | 3.4 | 2.1 | 2.1 |
| | Ethylene content (A) | | % by mass | 0.9 | 1.3 | 1.3 | 1.0 | 0.9 |
| | Density (B) | | kg/m$^3$ | 900 | 898 | 904 | 899 | 900 |
| | MFR (A)/MFR (B) | | - | 1.0 | 1.0 | 0.6 | 1.0 | 1.0 |
| Resin layer[II] (surface layer) | (A) | A-1 | % by mass | 50.0 | 50.0 | 50.0 | 50.0 | 50.0 |
| | | A-2 | | 39.0 | 39.0 | 39.0 | 39.0 | 39.0 |
| | | A-3 | | - | - | - | - | - |
| | | A-4 | | - | - | - | - | - |
| | | A-5 | | - | - | - | - | - |
| | | A-6 | | - | - | - | - | - |
| | (B) | B-1 | | - | - | - | - | - |
| | | B-2 | | 10.0 | 10.0 | 10.0 | 10.0 | 10.0 |
| | | B-3 | | - | - | - | - | - |
| | | B-4 | | - | - | - | - | - |
| | | B-5 | | - | - | - | - | - |
| | | B-6 | | - | - | - | - | - |
| | (C) | Nucleating agent | | 1.0 | 1.0 | 1.0 | 1.0 | 1.0 |
| | MFR (A) | | g/10 min | 2.2 | 2.2 | 2.2 | 2.2 | 4.6 |
| | MFR (B) | | g/10 min | 2.0 | 2.0 | 2.0 | 2.0 | 2.0 |
| | Ethylene content (A) | | % by mass | 1.2 | 1.2 | 1.2 | 1.2 | 1.2 |
| | Density (B) | | kg/m$^3$ | 904 | 904 | 904 | 904 | 904 |
| | MFR (A)/MFR (B) | | - | 1.1 | 1.1 | 1.1 | 1.1 | 2.3 |
| Thickness ratio of each layer([II]/[I]/[II]) | | | - | 1/10/1 | 1/10/1 | 1/10/1 | 1/10/1 | 1/10/1 |
| Evaluation of container | Transparency | Total haze | % | 13 | 14 | 13 | 14 | 16 |
| | | Internal haze | % | 2.5 | 1.5 | 1.5 | 2.3 | 2.5 |
| | | External haze | % | 10.7 | 12.3 | 11.5 | 11.5 | 13.5 |
| | | External haze/Internal haze | - | 4.3 | 8.2 | 7.7 | 5.0 | 5.4 |
| | Low-temperature impact strength | Maximum fall height | m | 7 | 3 | 2 | 5 | 5 |
| | Rigidity | Tensile modulus (MD) | MPa | 1320 | 1400 | 1430 | 1380 | 1280 |
| | | Tensile modulus (TD) | MPa | 1290 | 1350 | 1350 | 1320 | 1270 |

[Table 4]

| | | | | Comparative Example 3 | Comparative Example 4 | Comparative Example 5 | Comparative Example 6 | Comparative Example 7 |
|---|---|---|---|---|---|---|---|---|
| Resin layer[I] (intermediate layer) | (A) | A-1 | % by mass | 50.0 | 50.0 | 33.0 | 29.0 | 50.0 |
| | | A-2 | | 25.0 | 40.0 | 25.0 | 26.0 | 40.0 |
| | | A-3 | | - | - | - | - | - |
| | | A-4 | | - | - | - | - | - |
| | | A-5 | | - | - | - | - | - |
| | | A-6 | | - | - | - | - | - |
| | (B) | B-1 | | - | 7.0 | 42.0 | 45.0 | - |
| | | B-2 | | - | - | - | - | - |
| | | B-3 | | - | - | - | - | 10.0 |
| | | B-4 | | - | - | - | - | - |
| | | B-5 | | 25.0 | 3.0 | - | - | - |
| | | B-6 | | - | - | - | - | - |
| | Nucleating agent | | | 1.0 | 1.0 | 1.0 | 1.0 | 1.0 |
| | MFR (A) | | g/10 min | 2.1 | 2.2 | 2.2 | 2.2 | 2.2 |
| | MFR (B) | | g/10 min | 2.4 | 3.4 | 4.0 | 4.0 | 20.0 |
| | Ethylene content (A) | | % by mass | 0.9 | 1.2 | 1.1 | 1.2 | 1.1 |
| | Density (B) | | kg/m$^3$ | 885 | 904 | 913 | 913 | 910 |
| | MFR (A)/MFR (B) | | - | 0.9 | 0.6 | 0.6 | 0.6 | 0.1 |
| Resin layer[II] (surface layer) | (A) | A-1 | % by mass | 50.0 | 50.0 | 50.0 | 50.0 | 53.0 |
| | | A-2 | | 39.0 | 39.0 | 34.0 | 39.0 | 36.0 |
| | | A-3 | | - | - | - | - | - |
| | | A-4 | | - | - | - | - | - |
| | | A-5 | | - | - | - | - | - |
| | | A-6 | | - | - | - | - | - |
| | (B) | B-1 | | - | 7.0 | 15.0 | - | - |
| | | B-2 | | 10.0 | - | - | 10.0 | - |
| | | B-3 | | - | - | - | - | 10.0 |
| | | B-4 | | - | - | - | - | - |
| | | B-5 | | - | 3.0 | - | - | - |
| | | B-6 | | - | - | - | - | - |
| | (C) | Nucleating agent | | 1.0 | 1.0 | 1.0 | 1.0 | 1.0 |
| | MFR (A) | | g/10 min | 2.2 | 2.2 | 2.2 | 2.2 | 2.2 |
| | MFR (B) | | g/10 min | 2.0 | 3.4 | 4.0 | 2.0 | 20.0 |
| | Ethylene content (A) | | % by mass | 1.2 | 1.2 | 1.1 | 1.2 | 1.1 |
| | Density (B) | | kg/m$^3$ | 904 | 904 | 913 | 904 | 910 |
| | MFR (A)/MFR (B) | | - | 1.1 | 0.6 | 0.6 | 1.1 | 0.1 |
| Thickness ratio of each layer([II]/[I]/[II]) | | | - | 1/10/1 | 1/10/1 | 1/10/1 | 1/10/1 | 1/10/1 |
| Evaluation of container | Transparency | Total haze | % | 20 | 19 | 27 | 25 | 38 |
| | | Internal haze | % | 3.3 | 0.8 | 3.5 | - | 1.8 |
| | | External haze | % | 16.7 | 18.3 | 23.3 | - | 36.2 |
| | | External haze/Internal haze | - | 5.1 | 22.9 | 6.7 | - | 20.1 |
| | Low-temperature impact strength | Maximum fall height | m | 8 | 1 | 2 | 9 | 1 |
| | Rigidity | Tensile modulus (MD) | MPa | 980 | 1420 | 1000 | 930 | 1400 |
| | | Tensile modulus (TD) | | 1000 | 1300 | 950 | 890 | 1350 |

[Table 5]

| | | | | Comparative Example 8 | Comparative Example 9 | Comparative Example 10 | Comparative Example 11 |
|---|---|---|---|---|---|---|---|
| Resin layer[I] (intermediate layer) | (A) | A-1 | % by mass | 50.0 | - | - | 50.0 |
| | | A-2 | | 40.0 | - | - | 40.0 |
| | | A-3 | | - | - | - | - |
| | | A-4 | | - | - | 85.0 | - |
| | | A-5 | | - | 85.0 | - | - |
| | | A-6 | | - | - | - | - |
| | (B) | B-1 | | - | 15.0 | 15.0 | - |
| | | B-2 | | - | - | - | - |
| | | B-3 | | - | - | - | - |
| | | B-4 | | 10.0 | - | - | - |
| | | B-5 | | - | - | - | - |
| | | B-6 | | - | - | - | 10.0 |
| | Nucleating agent | | | 1.0 | 1.0 | 1.0 | - |
| | MFR (A) | | g/10 min | 2.2 | 20.0 | 0.5 | 2.2 |
| | MFR (B) | | g/10 min | 3.0 | 4.0 | 4.0 | 0.2 |
| | Ethylene content (A) | | % by mass | 1.1 | 0.0 | 4.5 | 1.1 |
| | Density (B) | | kg/m³ | 923 | 913 | 913 | 958 |
| | MFR (A)/MFR (B) | | - | 0.7 | 5.0 | 0.1 | 10.0 |
| Resin layer[II] (surface layer) | (A) | A-1 | % by mass | 53.0 | - | - | 53.0 |
| | | A-2 | | 36.0 | - | - | 36.0 |
| | | A-3 | | - | - | - | - |
| | | A-4 | | - | - | 84.0 | - |
| | | A-5 | | - | 84.0 | - | - |
| | | A-6 | | - | - | - | - |
| | (B) | B-1 | | - | 15.0 | 15.0 | - |
| | | B-2 | | - | - | - | - |
| | | B-3 | | - | - | - | - |
| | | B-4 | | 10.0 | - | - | - |
| | | B-5 | | - | - | - | - |
| | | B-6 | | - | - | - | 10.0 |
| | (C) | Nucleating agent | | 1.0 | 1.0 | 1.0 | 1.0 |
| | MFR (A) | | g/10 min | 2.2 | 7.0 | 0.5 | 2.2 |
| | MFR (B) | | g/10 min | 3.0 | 4.0 | 4.0 | 0.2 |
| | Ethylene content (A) | | % by mass | 1.1 | 0.0 | 4.5 | 1.1 |
| | Density (B) | | kg/m³ | 923 | 913 | 913 | 958 |
| | MFR (A)/MFR (B) | | - | 0.7 | 1.8 | 0.1 | 10.0 |
| Thickness ratio of each layer([II]/[I]/[II]) | | | - | 1/10/1 | 1/10/1 | 1/10/1 | 1/10/1 |
| Evaluation of container | Transparency | Total haze | % | 24 | Unable to be formed | Unable to be formed | 35 |
| | | Internal haze | % | - | | | - |
| | | External haze | % | - | | | - |
| | | External haze/Internal haze | - | - | | | - |
| | Low-temperature impact strength | Maximum fall height | m | 1 | | | 0 |
| | Rigidity | Tensile modulus (MD) | MPa | 1450 | | | 1530 |
| | | Tensile modulus (TD) | | 1350 | | | 1700 |

[Table 6]

| | | | | Comparative Example 12 | Comparative Example 13 | Comparative Example 14 |
|---|---|---|---|---|---|---|
| Resin layer[I] (intermediate layer) | (A) | A-1 | % by mass | - | 50.0 | 33.0 |
| | | A-2 | | 35.0 | 40.0 | 25.0 |
| | | A-3 | | - | - | - |
| | | A-4 | | - | - | - |
| | | A-5 | | - | - | - |
| | | A-6 | | 50.0 | - | - |
| | (B) | B-1 | | - | 7.0 | 42.0 |
| | | B-2 | | 15.0 | - | - |
| | | B-3 | | - | - | - |
| | | B-4 | | - | - | - |
| | | B-5 | | - | 3.0 | - |
| | | B-6 | | - | - | - |
| | Nucleating agent | | | 1.0 | 1.0 | 1.0 |
| | MFR (A) | | g/10 min | 2.7 | 2.2 | 2.2 |
| | MFR (B) | | g/10 min | 2.0 | 3.4 | 4.0 |
| | Ethylene content (A) | | % by mass | 1.1 | 1.2 | 1.1 |
| | Density (B) | | kg/m³ | 904 | 904 | 913 |
| | MFR (A)/MFR (B) | | - | 1.4 | 0.6 | 0.6 |
| Resin layer[II] (surface layer) | (A) | A-1 | % by mass | - | - | - |
| | | A-2 | | - | - | - |
| | | A-3 | | - | - | - |
| | | A-4 | | - | - | - |
| | | A-5 | | - | - | - |
| | | A-6 | | - | - | - |
| | (B) | B-1 | | - | - | - |
| | | B-2 | | - | - | - |
| | | B-3 | | - | - | - |
| | | B-4 | | - | - | - |
| | | B-5 | | - | - | - |
| | | B-6 | | - | - | - |
| | (C) | Nucleating agent | | - | - | - |
| | MFR (A) | | g/10 min | - | - | - |
| | MFR (B) | | g/10 min | - | - | - |
| | Ethylene content (A) | | % by mass | - | - | - |
| | Density (B) | | kg/m³ | - | - | - |
| | MFR(A)/MFR(B) | | - | - | - | - |
| Thickness ratio of each layer([II]/[I]/[II]) | | | - | (Single layer) | (Single layer) | (Single layer) |
| Evaluation of container | Transparency | Total haze | % | 11 | 19 | 35 |
| | | Internal haze | % | 1.1 | 1.0 | 3.5 |
| | | External haze | % | 9.9 | 18.0 | 31.5 |
| | | External haze/Internal haze | - | 9.0 | 22.9 | 9.0 |
| | Low-temperature impact strength | Maximum fall height | m | 2 | 1 | 2 |
| | Rigidity | Tensile modulus (MD) | MPa | 1390 | 1420 | 1000 |
| | | Tensile modulus (TD) | | 1340 | 1300 | 950 |

## Claims

1. A laminate comprising:

   a resin layer [I] comprising a resin composition [I] comprising 60.0 % by mass or more and 83.0 % by mass or less of a propylene-based polymer (A) and 17.0 % by mass or more and 40.0 % by mass or less of an ethylene-based polymer (B), wherein (A) + (B) = 100.0 % by mass, and
   a resin layer [II] comprising a resin composition [II] comprising 80.0 % by mass or more and 99.9 % by mass or less of a propylene-based polymer (A), 0.0 % by mass or more and less than 15.0 % by mass of an ethylene-based polymer (B), and 0.1 % by mass or more and 20.0 % by mass or less of a nucleating agent (C), wherein (A) + (B) + (C) = 100.0 % by mass,
   the propylene-based polymer (A) and the ethylene-based polymer (B) satisfying the following requirements (i) to (iv) in both of the resin compositions [I] and [II]:

      requirement (i): the propylene-based polymer (A) has a melt flow rate (MFR) of 0.1 to 12.0 g/10 min, as measured at a temperature of 230°C under a load of 21.18 N in accordance with JIS K6921;
      requirement (ii): the propylene-based polymer (A) has a content of $\alpha$-olefm other than propylene of 0 to 5 % by mass, as determined by infrared spectroscopy;
      requirement (iii): the ethylene-based polymer (B) has a density of 890 to 920 kg/$m^3$, as measured in accordance with JIS K6922; and
      requirement (iv): the ratio of MFR (A) of the propylene-based polymer (A) measured at a temperature of 230°C under a load of 21.18 N in accordance with JIS K6921 to MFR (B) of the ethylene-based polymer (B) measured at a temperature of 230°C under a load of 21.18 N in accordance with JIS K6921, i.e., MFR (A)/MFR (B), is 0.2 to 5.0.

2. The laminate according to claim 1, wherein in both of the resin compositions [I] and [II], the ethylene-based polymer (B) is a composition comprising 50.0 to 100.0 % by mass of an ethylene-based polymer (B1) with a density of 891 to 945 kg/$m^3$ and 0.0 to 50.0 % by mass of an ethylene-based polymer (B2) with a density of 890 kg/$m^3$ or less, wherein (B1) + (B2) = 100.0 % by mass.

3. The laminate according to claim 1 or 2, wherein the surface of the laminate is formed from the resin layer [II].

4. The laminate according to claim 1 or 2, wherein the laminate comprises the resin layer [I] and the resin layer [II], the thickness ratio of the resin layer [II] to the resin layer [I] (resin layer [II]/resin layer [I]) being 1/198 to 1/3.

5. The laminate according to claim 1 or 2, wherein the resin layer [II], the resin layer [I], and the resin layer [II] are laminated in this order, and the thickness ratio of each layer (resin layer [II]/resin layer [I]/resin layer [II]) is 1/198/1 to 1/3/1.

6. The laminate according to any one of claims 1 to 5, wherein the thickness of the laminate is 3 mm or less.

7. The laminate according to any one of claims 1 to 6, wherein the content of $\alpha$-olefm other than propylene in the requirement (ii) is the content of ethylene.

8. A container comprising the laminate according to any one of claims 1 to 7.

9. The container according to claim 8, wherein the thickness of the resin layer [II] is 1.5 $\mu$m or more.

10. The container according to claim 8 or 9, wherein the container is obtained by vacuum pressure forming the laminate.

11. A method for manufacturing a container, comprising vacuum forming, pressure forming, or vacuum pressure forming the laminate according to any one of claims 1 to 7 to obtain the container.

12. A sheet for use as a raw material of a laminate, comprising 60.0 % by mass or more and 83.0 % by mass or less of a propylene-based polymer (A) and 17.0 % by mass or more and 40.0 % by mass or less of an ethylene-based polymer (B), wherein (A) + (B) = 100.0 % by mass,
    the sheet satisfying the following requirements (i) to (v):

requirement (i): the propylene-based polymer (A) has a melt flow rate (MFR) of 0.1 to 12.0 g/10 min, as measured at a temperature of 230°C under a load of 21.18 N in accordance with JIS K6921;
requirement (ii): the propylene-based polymer (A) has a content of α-olefm other than propylene of 0 to 5 % by mass, as determined by infrared spectroscopy;
requirement (iii): the ethylene-based polymer (B) has a density of 890 to 920 kg/m$^3$, as measured in accordance with JIS K6922;
requirement (iv): the ratio of MFR (A) of the propylene-based polymer (A) measured at a temperature of 230°C under a load of 21.18 N in accordance with JIS K6921 to MFR (B) of the ethylene-based polymer (B) measured at a temperature of 230°C under a load of 21.18 N in accordance with JIS K6921, i.e., MFR (A)/MFR (B), is 0.2 to 5.0; and
requirement (v): the sheet for use as a raw material of a laminate has a thickness of 2.97 mm or less.

## Patentansprüche

**1.** Laminat, umfassend:

eine Harzschicht [I], umfassend eine Harzzusammensetzung [I], die 60,0 Massen-% oder mehr und 83,0 Massen-% oder weniger eines Polymers (A) auf Propylenbasis und 17,0 Masse-% oder mehr und 40,0 Masse-% oder weniger eines Polymers (B) auf Ethylenbasis umfasst, wobei (A) + (B) = 100,0 Masse-%, und
eine Harzschicht [II], umfassend eine Harzzusammensetzung [II], die 80,0 Masse-% oder mehr und 99,9 Masse-% oder weniger eines Polymers (A) auf Propylenbasis, 0,0 Masse-% oder mehr und weniger als 15,0 Masse-% eines Polymers (B) auf Ethylenbasis und 0,1 Masse-% oder mehr und 20,0 Masse-% oder weniger eines Nukleierungsmittels (C) umfasst, wobei (A) + (B) + (C) = 100,0 Masse-%,
wobei das Polymer (A) auf Propylenbasis und das Polymer (B) auf Ethylenbasis die folgenden Anforderungen (i) bis (iv) in beiden der Harzzusammensetzungen [I] und [II] erfüllen:

Anforderung (i): das Polymer (A) auf Propylenbasis weist eine Schmelzflussrate (MFR) von 0,1 bis 12,0 g/10 min auf, gemessen bei einer Temperatur von 230 °C unter einer Last von 21,18 N in Übereinstimmung mit JIS K6921;
Anforderung (ii): das Polymer (A) auf Propylenbasis weist einen Gehalt an einem anderen α-Olefin als Propylen von 0 bis 5 Masse-% auf, bestimmt durch Infrarotspektroskopie;
Anforderung (iii): das Polymer (B) auf Ethylenbasis weist eine Dichte von 890 bis 920 kg/m$^3$ auf, gemessen in Übereinstimmung mit JIS K6922; und
Anforderung (iv): das Verhältnis von MFR (A) des Polymers (A) auf Propylenbasis, gemessen bei einer Temperatur von 230 °C unter einer Last von 21,18 N in Übereinstimmung mit JIS K6921 zu MFR (B) des Polymers (B) auf Ethylenbasis, gemessen bei einer Temperatur von 230 °C unter einer Last von 21,18 N in Übereinstimmung mit JIS K6921, d. h. MFR (A)/MFR (B), beträgt 0,2 bis 5,0.

**2.** Laminat nach Anspruch 1, wobei in beiden der Harzzusammensetzungen [I] und [II] das Polymer (B) auf Ethylenbasis eine Zusammensetzung ist, die 50,0 bis 100,0 Masse-% eines Polymers (B1) auf Ethylenbasis mit einer Dichte von 891 bis 945 kg/m$^3$ und 0,0 bis 50,0 Masse-% eines Polymers (B2) auf Ethylenbasis mit einer Dichte von 890 kg/m$^3$ oder weniger umfasst, wobei (B1) + (B2) = 100,0 Masse-%.

**3.** Laminat nach Anspruch 1 oder 2, wobei die Oberfläche des Laminats aus der Harzschicht [II] ausgebildet wird.

**4.** Laminat nach Anspruch 1 oder 2, wobei das Laminat die Harzschicht [I] und die Harzschicht [II] umfasst, das Dickenverhältnis der Harzschicht [II] zu der Harzschicht [I] (Harzschicht [II]/Harzschicht [I]) 1/198 bis 1/3 beträgt.

**5.** Laminat nach Anspruch 1 oder 2, wobei die Harzschicht [II], die Harzschicht [I] und die Harzschicht [II] in dieser Reihenfolge laminiert werden und das Dickenverhältnis jeder Schicht (Harzschicht [II]/Harzschicht [I]/ Harzschicht [II]) 1/198/1 bis 1/3/1 beträgt.

**6.** Laminat nach einem der Ansprüche 1 bis 5, wobei die Dicke des Laminats 3 mm oder weniger beträgt.

**7.** Laminat nach einem der Ansprüche 1 bis 6, wobei der Gehalt an einem anderen α-Olefin als Propylen in der Anforderung (ii) der Gehalt an Ethylen ist.

**8.** Behälter, umfassend das Laminat nach einem der Ansprüche 1 bis 7.

**9.** Behälter nach Anspruch 8, wobei die Dicke der Harzschicht [II] 1,5 μm oder mehr beträgt.

**10.** Behälter nach Anspruch 8 oder 9, wobei der Behälter durch Vakuumdruck erhalten wird, der das Laminat ausbildet.

**11.** Verfahren zum Fertigen eines Behälters, umfassend das Vakuumausbilden, Druckausbilden oder Vakuumdruckausbilden, das das Laminat nach einem der Ansprüche 1 bis 7 ausbildet, um den Behälter zu erhalten.

**12.** Folie für die Verwendung als ein Rohmaterial eines Laminats, umfassend 60,0 Massen-% oder mehr und 83,0 Massen-% oder weniger eines Polymers (A) auf Propylenbasis und 17,0 Masse-% oder mehr und 40,0 Masse-% oder weniger eines Polymers (B) auf Ethylenbasis, wobei (A) + (B) = 100,0 Masse-%,
wobei die Folie die folgenden Anforderungen (i) bis (v) erfüllt:

Anforderung (i): das Polymer (A) auf Propylenbasis weist eine Schmelzflussrate (MFR) von 0,1 bis 12,0 g/10 min auf, gemessen bei einer Temperatur von 230 °C unter einer Last von 21,18 N in Übereinstimmung mit JIS K6921;
Anforderung (ii): das Polymer (A) auf Propylenbasis weist einen Gehalt an einem anderen α-Olefin als Propylen von 0 bis 5 Masse-% auf, bestimmt durch Infrarotspektroskopie;
Anforderung (iii): das Polymer (B) auf Ethylenbasis weist eine Dichte von 890 bis 920 kg/$m^3$ auf, gemessen in Übereinstimmung mit JIS K6922; und
Anforderung (iv): das Verhältnis von MFR (A) des Polymers (A) auf Propylenbasis, gemessen bei einer Temperatur von 230 °C unter einer Last von 21,18 N in Übereinstimmung mit JIS K6921 zu MFR (B) des Polymers (B) auf Ethylenbasis, gemessen bei einer Temperatur von 230 °C unter einer Last von 21,18 N in Übereinstimmung mit JIS K6921, d. h. MFR (A)/MFR (B), beträgt 0,2 bis 5,0; und
Anforderung (v): die Folie für die Verwendung als ein Rohmaterial eines Laminats weist eine Dicke von 2,97 mm oder weniger auf.

## Revendications

**1.** Stratifié comprenant :

une couche de résine [I] comprenant une composition de résine [I] comprenant 60,0% en masse ou plus et 83,0% en masse ou moins d'un polymère à base de propylène (A) et 17,0% en masse ou plus et 40,0% en masse ou moins d'un polymère à base d'éthylène (B), dans lequel (A) + (B) = 100,0% en masse, et
une couche de résine [II] comprenant une composition de résine [II] comprenant 80,0% en masse ou plus et 99,9% en masse ou moins d'un polymère à base de propylène (A), 0,0% en masse ou plus et moins de 15,0% en masse d'un polymère à base d'éthylène (B) et 0,1% en masse ou plus et 20,0 % en masse ou moins d'un agent de nucléation (C), dans lequel (A) + (B) + (C) = 100,0% en masse,
le polymère à base de propylène (A) et le polymère à base d'éthylène (B) satisfaisant les exigences suivantes (i) à (iv) dans les deux compositions de résine [I] et [II] :

exigence (i) : le polymère à base de propylène (A) a un indice de fluidité à chaud (MFR) de 0,1 à 12,0 g/10 min, tel que mesuré à une température de 230 °C sous une charge de 21,18 N conformément à JIS K6921 ;
exigence (ii) : le polymère à base de propylène (A) a une teneur en α-oléfine autre que le propylène de 0 à 5% en masse, déterminée par spectroscopie infrarouge ;
exigence (iii) : le polymère à base d'éthylène (B) a une densité de 890 à 920 kg/$m^3$, telle que mesurée conformément à JIS K6922 ; et
exigence (iv) : le rapport de MFR (A) du polymère à base de propylène (A) mesuré à une température de 230 °C sous une charge de 21,18 N conformément à JIS K6921 par rapport à MFR (B) du polymère à base d'éthylène (B) mesuré à une température de 230 °C sous une charge de 21,18 N conformément à JIS K6921, c'est-à-dire MFR (A)/MFR (B), est de 0,2 à 5,0.

**2.** Stratifié selon la revendication 1, dans lequel dans les deux compositions de résine [I] et [II], le polymère à base d'éthylène (B) est une composition comprenant 50,0 à 100,0% en masse d'un polymère à base d'éthylène (B1) d'une densité de 891 à 945 kg/$m^3$ et de 0,0 à 50,0% en masse d'un polymère à base d'éthylène (B2) d'une densité de 890 kg/$m^3$ ou moins, dans lequel (B1) + (B2) = 100,0% en masse.

3. Stratifié selon la revendication 1 ou 2, dans lequel la surface du stratifié est formée à partir de la couche de résine [II].

4. Stratifié selon la revendication 1 ou 2, dans lequel le stratifié comprend la couche de résine [I] et la couche de résine [II], le rapport d'épaisseur de la couche de résine [II] par rapport à la couche de résine [I] (couche de résine [II]/couche de résine [I]) étant de 1/198 à 1/3.

5. Stratifié selon la revendication 1 ou 2, dans lequel la couche de résine [II], la couche de résine [I] et la couche de résine [II] sont stratifiées dans cet ordre, et le rapport d'épaisseur de chaque couche (couche de résine [II]/couche de résine [I]/couche de résine [II]) est de 1/198/1 à 1/3/1.

6. Stratifié selon l'une quelconque des revendications 1 à 5, dans lequel l'épaisseur du stratifié est de 3 mm ou moins.

7. Stratifié selon l'une quelconque des revendications 1 à 6, dans lequel la teneur en $\alpha$-oléfine autre que le propylène dans l'exigence (ii) est la teneur en éthylène.

8. Récipient comprenant le stratifié selon l'une quelconque des revendications 1 à 7.

9. Récipient selon la revendication 8, dans lequel l'épaisseur de la couche de résine [II] est de 1,5 $\mu$m ou plus.

10. Récipient selon la revendication 8 ou 9, dans lequel le récipient est obtenu par formage sous pression sous vide du stratifié.

11. Procédé de fabrication d'un récipient, comprenant le formage sous vide, le formage sous pression ou le formage sous pression sous vide du stratifié selon l'une quelconque des revendications 1 à 7 pour obtenir le récipient.

12. Feuille à utiliser comme matière première d'un stratifié, comprenant 60,0% en masse ou plus et 83,0% en masse ou moins d'un polymère à base de propylène (A) et 17,0% en masse ou plus et 40,0% en masse ou moins d'un polymère à base d'éthylène (B), dans laquelle (A) + (B) = 100,0% en masse,
la feuille satisfaisant aux exigences suivantes (i) à (v) :

exigence (i): le polymère à base de propylène (A) a un indice de fluidité à chaud (MFR) de 0,1 à 12,0 g/10 min, tel que mesuré à une température de 230 °C sous une charge de 21,18 N conformément à JIS K6921 ;
exigence (ii) : le polymère à base de propylène (A) a une teneur en $\alpha$-oléfine autre que le propylène de 0 à 5% en masse, déterminée par spectroscopie infrarouge ;
exigence (iii) : le polymère à base d'éthylène (B) a une densité de 890 à 920 $kg/m^3$, telle que mesurée conformément à JIS K6922 ;
exigence (iv) : le rapport de MFR (A) du polymère à base de propylène (A) mesuré à une température de 230 °C sous une charge de 21,18 N conformément à JIS K6921 par rapport à MFR (B) du polymère à base d'éthylène (B) mesuré à une température de 230 °C sous une charge de 21,18 N conformément à JIS K6921, c'est-à-dire MFR (A)/MFR (B), est de 0,2 à 5,0 ; et
exigence (v) : la feuille à utiliser comme matière première d'un stratifié a une épaisseur de 2,97 mm ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001026686 A
- JP 2002187996 A
- JP 2002187997 A
- EP 0850756 A2